# EUROPÄISCHE PATENTSCHRIFT

(11) **EP 0 601 295 B1**
(45) Veröffentlichungstag und Bekanntmachung des Hinweises auf die Patenterteilung: **15.05.1996**
(21) Anmeldenummer: 93115870.3
(22) Anmeldetag: 01.10.1993
(51) Int. Cl.: F16L 9/133, B32B 1/08, B32B 27/08

(54) **Mehrschichtiges Kunststoffrohr**
Multi-layered plastic tube
Tuyau multicouche en plastique

(30) Priorität: 03.12.1992 DE 4240658
(43) Veröffentlichungstag der Anmeldung: 15.06.1994
(73) Patentinhaber: HÜLS AKTIENGESELLSCHAFT, D-45764 Marl (DE)
(72) Erfinder: Röber, Stefan, Dr., D-45772 Marl (DE); Feinauer, Roland, Dr., D-45770 Marl (DE); Herrmann, Hans-Dieter, D-45770 Marl (DE); Jadamus, Hans, Dr., D-45768 Marl (DE); Mügge, Joachim, Dr., D-45721 Haltern (DE); Ries, Hans, Dr., D-45772 Marl (DE)

(56) Entgegenhaltungen:
- DE-A- 2 549 227
- DE-C- 3 827 092
- DE-C- 4 001 125

## Beschreibung

Gegenstand der Erfindung ist ein mehrschichtiges Kunststoffrohr.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium, beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. zeigen sie erhebliche Nachteile wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395; 37 15 251; 38 21 723; 40 01 125; 40 01 126). Die praktische Anwendung dieser Vorschläge hat jedoch gezeigt, daß zwar einzelne Nachteile vermieden werden können, daß aber das Gesamteigenschaftsbild immer noch nicht befriedigt.

In DE-PS 38 27 092 wird ein mehrschichtiges Kunststoffrohr beschrieben, das von innen nach außen Schichten aus Polyamid, Polyvinylalkohol, Polyamid und Polyester aufweist. Der Polyester wird hierbei nur in einer dünnen Außenschicht eingesetzt, um so eine höhere Kurzzeitwärmeformbeständigkeit zu erreichen. Es ist dem Fachmann bekannt, daß die weitaus meisten Polymere, so auch Polyamide und Polyester, miteinander unverträglich sind, weshalb bei der Herstellung von Mehrschichtverbunden keine Anhaftung zwischen den Laminatschichten erreicht wird. Ein kraftschlüssiger Verbund zwischen den einzelnen Polymerschichten ist bei technischen Anwendungen unbedingt erforderlich.

Vor allem die Permeation von methanolhaltigen Kraftstoffen konnte durch die obengenannten Vorschläge nur unzureichend verringert werden.

Die Reduzierung der Permeation durch Verwendung neuartiger Zwischenschichten ist insbesondere deshalb von entscheidender Bedeutung, weil die zulässigen Emissionswerte durch gesetzliche Vorschriften immer weiter abgesenkt werden.

Aufgabe der Erfindung war es, ein Polyamidrohr mit einer guten Sperrwirkung gegen das transportierte Medium vor allem gegenüber methanolhaltigen Kraftstoffen, einer zufriedenstellenden Maßhaltigkeit sowie einer befriedigenden mechanischen Belastbarkeit zu entwickeln.

Diese Aufgabe wird gelöst durch ein mehrschichtiges Kunststoffrohr, indem es
I. mindestens aus einer Außenschicht auf Basis einer Formmasse aus Polyamid
und
II. mindestens aus einer Schicht einer Formmasse auf Basis eines Gemisches aus
   a. 99 bis 95 Gew.-% eines linearen, kristallinen Polyesters
      und
   b. 1 bis 5 Gew.-% eines Gemisches aus
      1. 30 bis 70 Gew.-% mindestens einer zwei Isocyanatgruppen aufweisenden Verbindung
         und
      2. 30 bis 70 Gew.-% mindestens einer mehr als zwei Isocyanatgruppen aufweisenden Verbindung
      besteht, wobei die der Komponente II.b. entstammenden Isocyanat gruppen in der Komponente II. in einer Konzentration zwischen 0,03 und 0,3 Gew.-% enthalten sind, und die Schichten kraftschlüssig miteinander verbunden sind.

Die Schicht gemäß II. setzt sich zusammen aus 99 bis 95, vorzugsweise 98 bis 96 Gew.-% an Komponente II.a. und 1 bis 5, vorzugsweise 2 bis 4 Gew.-% an Komponente II.b.

Die Komponente II.b. besteht aus einem Gemisch aus 30 bis 70 Gew.-%, vorzugsweise von 40 bis 60 Gew.-%, mindestens einer zwei Isocyanatgruppen aufweisenden Verbindung und aus 30 bis 70 Gew.-%, vorzugsweise 40 bis 60 Gew.-% mindestens einer mehr als zwei Isocyanatgruppen aufweisenden Verbindung.

Die der Komponente II.b. entstammenden Isocyanatgruppen sind in der Komponente II. in einer Konzentration zwischen 0,03 und 0,3 Gew.-%, vorzugsweise zwischen 0,06 und 0,25 Gew.-% vorhanden.

Als Polyamide kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α, ω-Aminocarbonsäure bzw. von dem davon abgeleitetem Lactam ausgegangen worden ist - H. Domininghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4'-aminocyclohexyl)-methan, Trimethylhexamethylendiamin, Hexamethylendiamin o. ä. Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatische/aromatische Polykondensate, wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Seiten 328 und 435 -Wiley & Sons (1982) beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität (ηᵣₑₗ) im Bereich von 1,5 bis 2,8.

In einer bevorzugten Ausführungsform werden solche Polyamide für die Komponente I. verwendet, bei denen mindestens 50 % aller Endgruppen Aminogruppen darstellen.

Die genannten Polyamide werden für sich oder in Gemischen eingesetzt.

Die linearen, kristallinen Polyester (Komponente II.a.) weisen nachstehende Grundstruktur auf 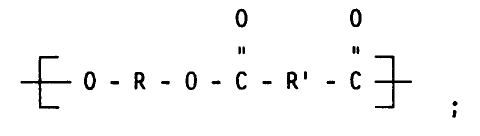 dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel 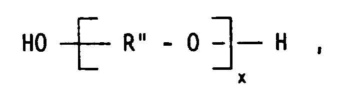 wobei R'' einen zweiwertigen Rest mit 2 bis 4 C-Atomen bedeutet und x einen Wert von 2 bis 50 annehmen kann, ersetzt sein.

Bevorzugt als Diole werden Ethylenglykol und insbesondere Tetramethylenglykol eingesetzt.

Als aromatische Dicarbonsäuren kommen z. B. Terephthalsäure, Isophthalsäure, 1.4-, 1.5-, 2.6- bzw. 2.7-Naphthalindicarbonsäure, Diphensäure, Diphenyl- ether-4.4'-dicarbonsäure in Frage. Terephthalsäure ist bevorzugt.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie**, 4. Aufl., Bd. 19, Seite 65 ff. - Verlag Chemie GmbH, Weinheim, 1980).

Die erfindungsgemäß eingesetzten Polyester weisen eine Viskositätszahl (J-Wert) im Bereich von 80 bis 240 cm³/g auf.

Die Polyamide der Außenschicht gemäß I. und/oder die linearen, kristallinen Polyester (Komponente II.a.) können bis zu 40 Gew.-% andere Thermoplaste enthalten, sofern diese die Verbundfähigkeit nicht stören. Insbesondere seien hier Polycarbonat [H. Schnell, **Chemistry and Physics of Polycarbonates**, Interscience Publishers, New York (1981)], Acrylnitril/Styrol/ Butadien- (Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat- (**Ullmanns Encyclopädie der technischen Chemie**, 4. Auflage, Bd. 19, Verlag Chemie Weinheim (1981), S. 277 - 295), Acrylnitril/Styrol-Copolymerisat (**Ullmanns Encyclopädie der technischen Chemie,** 4. Auflage, Bd. 19, Verlag Chemie Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide und/oder Polyester schlagzäh eingestellt werden. Geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen Tg < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Als Komponente II.b.1. werden Verbindungen eingesetzt, die zwei Isocyanatgruppen tragen. Als solche eignen sich insbesondere aromatische und (cyclo-)aliphatische Isocyanate wie beispielsweise 1,4-Phenylendiisocyanat, 2,4- Toluylendiisocyanat, 2,6-Toluylendiisocyanat, 1,5-Naphthylendiisocyanat, 1,6-Hexamethylendiisocyanat, Diphenylmethan-2,4-diisocyanat, Diphenylmethan-4,4'-diisocyanat, Diphenylmethan-2,2'-diisocyanat, Isophorondiisocyanat, 1,4-Tetramethylendiisocyanat, 1,12-Dodecandiisocyanat. Weitere Beispiele sind Cyclohexan-1,3-diisocyanat, Cyclohexan-1,4-diisocyanat, Cyclobutan-1,3-diisocyanat, 2,4-Hexahydrotoluylendiisocyanat, 2,6-Hexahydrotoluylendiisocyanat, Hexahydro-1,3-phenylendiisocyanat, Hexahydro-1,4-phenylendiisocyanat, Norbonandiisocyanat, p- oder m-Xylylendiisocyanate, Perhydro-2,4-diphenylmethandiisocyanat und Perhydro-4,4'-di-phenylmethandiisocyanat.

Als Komponente II.b.1. haben sich besonders vorteilhaft Isophorondiisocyanat sowie Umsetzungsprokukte davon mit sich selbst sowie mit geeigneten Reaktanten, wie z. B. α,ω-Diole mit 2 - 10 C-Atomen in der Kohlenstoffkette erwiesen.

Bevorzugte Umsetzungsprodukte ergeben sich beispielsweise aus der Reaktion mindestens zweier Moleküle Isophorondiisocyanat, wobei die Anbindung durch Reaktion von jeweils zwei Isocyanatgruppen unter Ausbildung einer Biuretgruppe erfolgt.

Weitere vorteilhafte Umsetzungsprodukte werden beispielsweise durch Umsetzung von jeweils zwei Isophorondiisocyanat-Molekülen mit einem Molekül Diol erhalten, wobei jeweils eine Isocyanatgruppe des Isophorondiisocyanats mit einer der Hydroxylgruppen des Diols eine Urethanbindung ausbildet. Beispiele für besonders gut geeignete Diole sind Butandiol und Diethylenglykol.

Als Komponente II.b.2. werden Verbindungen eingesetzt, die mehr als zwei und bevorzugt genau drei Isocyanatgruppen enthalten. Als solche eignen sich beispielsweise Triphenylmethan-4,4',4''-triisocyanat, weiterhin Umsetzungsprodukte aus den zu Komponente II.b.1. weiter oben aufgeführten Diisocyanaten, insbesondere Triisocyanurate dieser Diisocyanate, wie beispielsweise das Triisocyanurat, das aus Umsetzung von jeweils drei Molekülen Hexamethylendiisocyanat entsteht. Besonders bevorzugt ist das Triisocyanurat, das durch Umsetzung von jeweils drei Molekülen Isophorondiisocyanat entsteht.

Die Isocyanatgruppen der Komponenten II.b.1. und II.b.2. können blockiert vorliegen. Die Blockierung von Isocyanatgruppen ist bekannt (z. B. Paint Resin 58 (1988) 5, 18-19). Beispielsweise sei eine Blockierung durch Umsetzung der Isocyanatgruppen mit Diolen, Pyrazolen, Oximen, insbesondere Ketoximen, sowie Lactamen, insbesondere Caprolactam, angeführt.

Die Formmassen für die Schichten gemäß I. sowie II. können übliche Hilfs- und Zusatzstoffe wie z. B. Flammschutzmittel, Stabilisatoren, Weichmacher, Verarbeitungshilfsmittel, Viskositätsverbesserer, Füllstoffe, insbesondere solche zur Verbesserung der Leitfähigkeit, Pigmente o. ä. zugefügt werden. Die Menge der genannten Mittel ist so zu dosieren, daß die gewünschten Eigenschaften nicht ernsthaft beeinflußt werden.

Die Herstellung der Formmasse für die Schicht gemäß II. erfolgt nach üblichen und bekannten Verfahren durch Schmelzemischen der Komponenten II.a. und II.b. in einem gut knetenden Mischaggregat, wie z. B. einem Doppelschneckenkneter, bei Temperaturen, die sich nach den Schmelzpunkten der Komponenten II.a. und II.b. richten, im allgemeinen bei Temperaturen zwischen 200 und 300 °C.

Bei der Herstellung der Formmasse für die Schicht gemäß II. können die bei der Verarbeitung von Isocyanaten üblichen und bekannten Katalysatoren eingesetzt werden.

Die Formmasse für die Schicht gemäß II. sollte vor der Herstellung der mehrschichtigen Rohre trocken und unter Ausschluß von Luftfeuchtigkeit gelagert werden.

Die oben beschriebene Herstellung der Formmasse für die Schicht gemäß II. kann auch direkt in einem Speiseextruder der zur Herstellung der mehrschichtigen Rohre verwendeten Coextrusionsanlage oder Spritzgußanlage erfolgen, so daß die Formmasse für die Schicht gemäß II. direkt im Anschluß an ihre Herstellung - ohne weitere Zwischenlagerung - zu einer Schicht des mehrschichtigen Rohres verarbeitet werden kann. Im Falle der Coextrusion sind die Verarbeitungsbedingungen bei der Herstellung der mehrschichtigen Rohre so zu wählen, daß die Schmelzen mit ausreichend hohem Druck aufeinander gelegt werden.

Die Fertigung der mehrschichtigen Rohre erfolgt in bekannter, wie z. B. weiter oben im Stand der Technik beschriebenen Weise.

Die erfindungsgemäßen mehrschichtigen Rohre weisen in hervorragendem Maße eine gute Beständigkeit sowie gute Sperrwirkung gegen Diffusion gegenüber (petro)chemischen Stoffen, Lösemitteln und Kraftstoffen auf. Ferner sind die beiden Schichten kraftschlüssig miteinander verbunden, so daß z. B. bei thermischer Ausdehnung oder Biegen eines Rohres kein Abscheren der verschiedenen Schichten voneinander auftritt. Darüber hinaus ist es auch möglich, neben einem 2-Schichtrohr andere Rohrtypen herzustellen, die z. B. aus 3 oder mehr Schichten bestehen, indem weitere Schichten gemäß I. bzw. II. zusätzlich eingearbeitet werden.

In einer bevorzugten Ausführungsform haben die mehrschichtigen Rohre einen dreischichtigen Aufbau: Komponente I./ Komponente II./ Komponente I.

Bei einem mehrschichtigen Rohr mit einem Außendurchmesser von 8 mm und einer Gesamtwandstärke von 1 mm können die Schichtdicken beispielsweise von innen nach außen 0,2 mm, 0,2 mm, 0,6 mm betragen. Erfindungsgemäß sind auch andere Schichtdickenverteilungen denkbar, beispielsweise mit einer dickeren Mittelschicht von z. B. 0,4 mm.

Bevorzugt eingesetzt werden die erfindungsgemäßen Kunststoffrohre zum Transport (petro)chemischer Stoffe bzw. im Kraftfahrtsektor zum Durchleiten von Brems-, Kühl- und Hydraulikflüssigkeiten sowie Kraftstoff. Eine weitere Verwendung der mehrschichtigen Rohre besteht darin, daß aus ihnen Hohlkörper wie Tankbehälter oder Einfüllstutzen, insbesondere für den Kraftfahrzeugsektor, hergestellt werden.

Die in den Beispielen aufgeführten Ergebnisse wurden mit Hilfe nachstehender Meßverfahren bestimmt.

Die **Bestimmung der Lösungsviskosität** (rel. Viskosität ηᵣₑₗ) der Polyamide erfolgt unter Verwendung einer 0,5 Gew.-%igen m-Kresol-Lösung bei 25 °C gemäß DIN 53 727/ISO 307.

Zur **Bestimmung der Aminoendgruppen** wird 1 g der Polyamide in 50 ml m-Kresol bei 25 °C gelöst. Die Lösung wird mit Perchlorsäure potentiometrisch titriert.

Zur **Bestimmung der Carboxylendgruppen** in dem Polyamid wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/1) gegen Phenolphthalein bis zum Farbumschlag titriert.

Die **Bestimmung der Lösungsviskosität** (Viskositätszahl J) **der Polyester** erfolgt in einer 0,5 Gew.-%igen Phenol/o-Dichlorbenzol-Lösung (Gewichtsverhältnis 1 : 1) bei 25 °C gemäß DIN 53 728/ ISO 1628/5 - Teil 5.

Für die **Bestimmung der Isocyanatgruppen** werden 6 g der Komponente II. (Polyester, Isocyanat) bei 180 °C in einem Gemisch aus Dichlorbenzol/Dibutylamin (80 : 20 Vol.-%) gelöst. Die Lösung wird bei 20 °C mit 10-%iger Salzsäure gegen Bromphenol als Indikator titriert (DIN 53 185).

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Die **Bestimmung der Diffusion** von Kraftstoffanteilen erfolgt an Rohren mit einem Kraftstoffgemisch (Kraftstoff M15: 42,5 Vol.-Tle. Isooctan, 42,5 Vol.-Tle. Toluol und 15 Vol.-Tle. Methanol) bei 23 °C und 50 % Luftfeuchtigkeit. Die Proben mit der Länge von 200 mm werden mit dem Kraftstoffgemisch gefüllt und sind während der Messung mit einem gefüllten Vorratsbehältnis verbunden. Die Diffusion wird als Masseverlust durch Diffusion über die Zeit (Messung alle 24 h) ermittelt. Als Maß wird der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Beispiele sind nicht erfindungsgemäß.-

### Beispiele

### A. Komponente I.

- **PA 1**:: Polyamid 12 (ηᵣₑₗ: 2,1; 86,2 % der Endgruppen Aminoendgruppen; 50 mmol/kg Aminoendgruppen; 8 mmol/kg Carboxyl-Endgruppen)
- **PA 2**:: Polyamid 12 (ηᵣₑₗ: 2,0; 86,2 % der Endgruppen Aminogruppen; 50 mmol/kg Aminoendgruppen; 8 mmol/kg Carboxyl-Endgruppen; modifiziert mit 15 Gew.-% handelsüblichem Weichmacher)

### B. Komponente II.

- **Z 1**:: Homopolybutylenterephthalat (J-Wert: 165 cm³/g; VESTODUR® 3000 - HÜLS AG; NCO-Gehalt = 0)
- **Z 2**:: Homopolybutylenterephthalat (J-Wert: 145 cm³/g; VESTODUR® 2000 - HÜLS AG; NCO-Gehalt = 0)
- **Z 3**:: Homopolybutylenterephthalat (J-Wert: 115 cm³/g; VESTODUR® 1000 - HÜLS AG; NCO-Gehalt = 0)
- **Z 4**:: Homopolyethylenterephthalat (POLYCLEAR® TR 86 - HOECHST AG; NCO-Gehalt = 0)
- **Z 5**:: Mischung aus
a. 98 Gew.-% Homopolybutylenterephthalat (J-Wert 115 cm³/g; VESTODUR® 1000 - HÜLS AG)
   und
b. 2 Gew.-% einer Mischung bestehend aus
   b.1. 50 Gew.-% einer Verbindung, die aus 2 mol Isophorondiisocyanat und 1 mol Diethylenglykol hergestellt wurde, wobei die Verbindung jeweils über eine Urethanbindung erfolgte und die verbleibenden NCO-Gruppen mit Caprolactam blockiert sind,
      und
   b.2. 50 Gew.-% Isocyanurat des Isophorondiisocyanats (VESTANAT® T 1890 - HÜLS AG).
      NCO-Gruppen-Konzentration in Komponente II.: 0,08 Gew.-%.
- **Z 6**:: Mischung aus
a. 96 Gew.-% Homopolybutylenterephthalat (J-Wert 115 cm³/g; VESTODUR® 1000 - HÜLS AG)
   und
b. 4 Gew.-% einer Mischung bestehend aus
   b.1. 50 Gew.-% einer Verbindung, die aus 2 mol Isophorondiisocyanat und 1 mol Diethylenglykol hergestellt wurde, wobei die Verbindung jeweils über eine Urethanbindung erfolgte und die verbleibenden NCO-Gruppen mit Caprolactam blockiert sind,
      und
   b.2. 50 Gew.-% Isocyanurat des Isophorondiisocyanats (VESTANAT® T 1890 - HÜLS AG).
      NCO-Gruppen-Konzentration in Komponente II.: 0,16 Gew.-%.
- **Z 7**:: Mischung aus
a. 98 Gew.-% Homopolybutylenterephthalat (J-Wert 115 cm³/g; VESTODUR® 1000 - HÜLS AG)
   und
b. 2 Gew.-% einer Mischung bestehend aus
   b.1. 50 Gew.-% eines Uretdions, aufgebaut aus jeweils zwei Molekülen Isophorondiisocyanat, wobei die verbleibenden NCO-Gruppen mit Caprolactam blockiert sind,
      und
   b.2. 50 Gew.-% Isocyanurat des Isophorondiisocyanats (VESTANAT® T 1890 - Hüls AG).
      NCO-Gruppen-Konzentration in der Komponente II.: 0,10 Gew.-%.
- **Z 8**:: Mischung aus
a. 97 Gew.-% Homopolybutylenterephthalat (J-Wert 115 cm³/g; VESTODUR® 1000 - HÜLS AG)
   und
b. 3 Gew.-% einer Mischung bestehend aus
   b.1. 40 Gew.-% Isophorondiisocyanat mit Caprolactam blockiert
      und
   b.2. 60 Gew.-% Isocyanurat des Isophorondiisocyanats, wobei die verbleibenden NCO-Gruppen mit Caprolactam blockiert sind.
      NCO-Gruppen-Konzentration in der Komponente II.: 0,15 Gew.-%.
- **Z 9**:: Mischung aus
a. 97 Gew.-% Homopolybutylenterephthalat (J-Wert 115 cm³/g; VESTODUR® 1000 - HÜLS AG)
   und
b. 3 Gew.-% einer Mischung bestehend aus
   b.1. 30 Gew.-% einer Verbindung, die aus 2 mol Isophorondiisocyanat und 1 mol Butandiol hergestellt wurde, wobei die Verbindung jeweils über eine Urethanbindung erfolgte und die verbleibenden NCO-Gruppen mit Caprolactam blockiert sind,
      und
   b.2. 70 Gew.-% Isocyanurat des Isophorondiisocyanats (VESTANAT® T 1890 - HÜLS AG).
      NCO-Gruppen-Konzentration in der Komponente II.: 0,21 Gew.-%.

### C. Herstellung der mehrschichtigen Rohre

Die Rohre wurden auf einer Laborextrusionsanlage mit einem Fünfschichtwerkzeug (bei der Herstellung der Dreischichtrohre bleiben 2 Kanäle geschlossen) hergestellt. Die Zylindertemperaturen lagen bei 220 °C (PA 2), 230 °C (PA 1); 250 °C (Z 1; Z 2; Z 3; Z 4; Z 5; Z 6; Z 7; Z 8; Z 9). Der Schmelzedruck gemessen am Ende der Aufbereitungsextruder lag bei allen Formmassen oberhalb 160 bar. Die Schichtdicken betragen von innen nach außen: 0,2 mm; 0,2 mm; 0,6 mm.

**Tabelle**

| **Versuch** | **Innenschicht** | **Zwischenchicht** | **Außenschicht** | **Diffusion [g/d˙m]** | **An der Grenzfläche mechanisch trennbar - nach Lagerung bei 23 °C/in Kraftstoff**^{***)**} | |
|---|---|---|---|---|---|---|
| A | PA 1 | Z 1 | PA 1 | < 4 | ja | ja |
| B | PA 2 | Z 2 | PA 2 | < 4 | ja | ja |
| C | PA 2 | Z 4 | PA 2 | **) | ja | ja |
| D | PA 2 | PA 2 | PA 2 | 100 | nein | nein |
| E | PA 1 | PA 1 | PA 1 | 30 | nein | nein |
| F | PA 1 | Z 3 | PA 1 | < 4 | ja | ja |
| | | | | | | |
| 1 | PA 1 | Z 5 | PA 1 | < 4 | nein | nein |
| 2 | PA 2 | Z 5 | PA 2 | < 4 | nein | nein |
| 3 | PA 1 | Z 6 | PA 1 | < 4 | nein | nein |
| 4 | PA 2 | Z 6 | PA 2 | < 4 | nein | nein |
| 5 | PA 1 | Z 7 | PA 1 | < 4 | nein | nein |
| 6 | PA 1 | Z 8 | PA 1 | < 4 | nein | nein |
| 7 | PA 2 | Z 9 | PA 2 | < 4 | nein | nein |

| | | | | | | |
|---|---|---|---|---|---|---|
| *) Lagerung bei 23 °C während 5 Tagen in Normalkraftstoff M 15 (42,5 Vol.- Tle. Isooctan, 42,5 Vol.-Tle. Toluol und 15 Vol.-Tle. Methanol | | | | | | |
| **) nicht bestimmt | | | | | | |

## Patentansprüche

1. Mehrschichtiges Kunststoffrohr, bestehend aus:
I. mindestens einer Außenschicht auf Basis einer Formmasse aus Polyamid
und
II. mindestens einer Schicht aus einer Formmasse auf Basis eines Gemisches aus
a. 95 bis 99 Gew.-% eines teilkristallinen thermoplastischen Polyesters
und
b. 1 bis 5 Gew.-% eines Gemisches aus
1. 30 bis 70 Gew.-% mindestens einer zwei Isocyanatgruppen aufweisenden Verbindung
und
2. 30 bis 70 Gew.-% mindestens einer mehr als zwei Isocyanatgruppen aufweisenden Verbindung,
wobei die der Komponente II.b. entstammenden Isocyanatgruppen in der Komponente II. in einer Konzentration zwischen 0,03 und 0,3 Gew.-% enthalten sind,
und die Schichten kraftschlüssig miteinander verbunden sind.

2. Mehrschichtiges Kunststoffrohr nach Anspruch 1,
dadurch gekennzeichnet,
daß bei dem Polyamid der Komponente I. mindestens 50 % aller vorhandenen Endgruppen Aminogruppen sind.

3. Mehrschichtiges Kunststoffrohr nach den Ansprüchen 1 und 2,
dadurch gekennzeichnet,
daß die Schicht gemäß II. eine Formmasse auf Basis eines Gemisches aus
a. 96 bis 98 Gew.-% eines linearen teilkristallinen Polyesters
und
b. 2 bis 4 Gew.-% eines Gemisches der Isocyanatgruppen aufweisenden Verbindungen II.b.1. und II.b.2. darstellt.

4. Mehrschichtiges Kunststoffrohr nach den Ansprüchen 1 bis 3,
dadurch gekennzeichnet,
daß die Komponente II.b. aus einem Gemisch aus
1. 40 bis 60 Gew.-% mindestens einer zwei Isocyanatgruppen aufweisenden Verbindung
und
2. 40 bis 60 Gew.-% mindestens einer mehr als zwei Isocyanatgruppen aufweisenden Verbindung
besteht.

5. Mehrschichtiges Kunststoffrohr nach den Ansprüchen 1 bis 4,
dadurch gekennzeichnet,
daß die der Komponente II.b. entstammenden Isocyanatgruppen in der Schicht gemäß II. in einer Konzentration zwischen 0,06 und 0,25 Gew.-% vorhanden sind.

6. Mehrschichtiges Kunststoffrohr nach den Ansprüchen 1 bis 5,
dadurch gekennzeichnet,
daß die Komponente II.b.1. Isophorondiisocyanat oder eine daraus durch Umsetzung mit sich selbst oder mit Diolen abgeleitete Verbindung darstellt.

7. Mehrschichtiges Kunststoffrohr nach den Ansprüchen 1 bis 6,
dadurch gekennzeichnet,
daß die Komponente II.b.2. ein aus Isophorondiisocyanat abgeleitetes Isocyanurat darstellt.

8. Mehrschichtiges Kunststoffrohr nach den Ansprüchen 1 bis 7,
dadurch gekennzeichnet,
daß die Komponente II.b.1. und/oder II.b.2. ein durch ein Lactam blockiertes Isocyanat enthält.

9. Mehrschichtiges Kunststoffrohr nach den Ansprüchen 1 bis 8,
dadurch gekennzeichnet,
daß das Kunststoffrohr aus mehreren Schichten gemäß I. bzw. II. besteht.

10. Verwendung des mehrschichtigen Kunststoffrohres nach den Ansprüchen 1 bis 9 für den Transport chemischer oder petrochemischer Stoffe.

11. Verwendung des mehrschichtigen Kunststoffrohres nach den Ansprüchen 1 bis 9 auf dem Kraftfahrzeugsektor zum Durchleiten von Brems-, Kühl- und Hydraulikflüssigkeiten sowie Kraftstoff.

12. Verwendung des mehrschichtigen Kunststoffrohres nach den Ansprüchen 1 bis 9 zur Herstellung von Hohlkörpern.

13. Verwendung des mehrschichtigen Kunststoffrohres nach den Ansprüchen 1 bis 9 zur Herstellung von Einfüllstutzen oder Tankbehältern im Kraftfahrzeugsektor.

## Claims

1. A multilayer plastic pipe comprising
I. at least one outer layer based on a polyamide moulding composition and
II. at least one layer of a moulding composition based on a mixture of
a. from 95 to 99 % by weight of a partially crystalline thermoplastic polyester
and
b. from 1 to 5 % by weight of a mixture of
1. from 30 to 70 % by weight of at least one compound containing two isocyanate groups
and
2. from 30 to 70 % by weight of at least one compound containing more than two isocyanate groups,
where the isocyanate groups originating from component II.b. are present in component II. in a concentration of from 0.03 to 0.3 % by weight, and the layers are adhesively bonded to one another.

2. A multilayer plastic pipe according to claim 1, characterised in that at least 50 % of all the terminal groups present in the polyamide of component I. are amino groups.

3. A multilayer plastic pipe according to either of claims 1 and 2, characterised in that the layer as described in II. is a moulding composition based on a mixture of
a. from 96 to 98 % by weight of a linear partially crystalline polyester
and
b. from 2 to 4 % by weight of a mixture of compounds II.b.1. and II.b.2. containing isocyanate groups.

4. A multilayer plastic pipe according to any of claims 1 to 3, characterised in that component II.b. comprises a mixture of
1. from 40 to 60 % by weight of at least one compound containing two isocyanate groups
and
2. from 40 to 60 % by weight of at least one compound containing more than two isocyanate groups.

5. A multilayer plastic pipe according to any of claims 1 to 4, characterised in that the isocyanate groups originating from component II.b. are present in the layer as described in II. in a concentration of from 0.06 to 0.25 % by weight.

6. A multilayer plastic pipe according to any of claims 1 to 5, characterised in that component II.b.1. is isophorone diisocyanate or a compound derived therefrom by reaction with itself or with diols.

7. A multilayer plastic pipe according to any of claims 1 to 6, characterised in that component II.b.2. is an isocyanurate derived from isophorone diisocyanate.

8. A multilayer plastic pipe according to any of claims 1 to 7, characterised in that component II.b.1. and/or II.b.2. contains a lactam-blocked isocyanate.

9. A multilayer plastic pipe according to any of claims 1 to 8, characterised in that the plastic pipe comprises a plurality of layers as described in I. and/or II.

10. Use of the multilayer plastic pipe according to any of claims 1 to 9 for the transport of chemical or petrochemical substances.

11. Use of the multilayer plastic pipe according to any of claims 1 to 9 in the motor vehicle sector for carrying brake, cooling and hydraulic fluids and fuel.

12. Use of the multilayer plastic pipe according to any of claims 1 to 9 for the production of hollow articles.

13. Use of the multilayer plastic pipe according to any of claims 1 to 9 for the production of filling nozzles or fuel tanks in the motor vehicle sector.

## Revendications

1. Tuyau plastique multicouche, constitué :
I. d'au moins une couche extérieure à base d'un mélange à mouler constitué de polyamide, et
II. d'au moins une couche constituée d'un mélange à mouler à base d'un mélange
a. de 95 à 99 % en poids d'un polyester thermoplastique partiellement cristallin, et
b. de 1 à 5 % en poids d'un mélange
1. do 30 à 70 % en poids d'au moins un composé comportant deux groupes isocyanate, et
2. de 30 à 70 % en poids d'au moins un composé comportant plus de deux groupes isocyanate,
les groupes isocyanate provenant du constituant II.b étant contenus dans le constituant II selon une concentration de 0,03 à 0,3 % en poids,
les couches étant liées les unes aux autres par une liaison avec correspondance de forme.

2. Tuyau plastique multicouche selon la revendication 1, caractérisé en ce que, dans le polyamide du constituant I, au moins 50 % de tous les groupes terminaux présents sont des groupes amino.

3. Tuyau plastique multicouche selon les revendications 1 et 2, caractérisé en ce que la couche selon II représente un mélange à mouler à base d'un mélange constitué
a. de 96 à 98 % en poids d'un polyester linéaire partiellement cristallin, et
b. de 2 à 4 % en poids d'un mélange des composés II.b.1 et II.b.2 comportant des groupes isocyanate.

4. Tuyau plastique multicouche selon les revendications 1 à 3, caractérisé en ce que le constituant II.b est constitué d'un mélange
1, de 40 à 60 % en poids d'au moins un composé comportant deux groupes isocyanate, et
2. de 40 à 60 % en poids d'au moins un composé comportant plus de deux groupes isocyanate.

5. Tuyau plastique multicouche selon les revendications 1 à 4, caractérisé en ce que les groupes isocyanate provenant du constituant II.b sont présents dans la couche selon II en une concentration comprise entre 0,06 et 0,25 % en poids.

6. Tuyau plastique multicouche selon les revendications 1 à 5, caractérisé en ce que le constituant II.b.1 est le diisocyanate d'isophorone ou un composé dérivé de ce dernier par réaction avec soi-même ou avec des diols.

7. Tuyau plastique multicouche selon les revendications 1 à 6, caractérisé en ce que le constituant II.b.2 est un isocyanurate qui dérive du diisocyanate d'isophorone.

8. Tuyau plastique multicouche selon les revendications 1 à 7, caractérisé en ce que les constituants II.b.1 et/ou II.b.2 contiennent un isocyonate bloqué par un lactame.

9. Tuyau plastique multicouche selon les revendications 1 à 8, caractérisé en ce que le tuyau plastique est constitué de plusieurs couches selon I ou II.

10. Utilisation du tuyau plastique multicouche selon les revendications 1 à 9 pour le transport de substances chimiques ou pétrochimiques.

11. Utilisation du tuyau plastique multicouche selon les revendications 1 à 9 dans le secteur des véhicules à moteur, pour faire passer des liquides de frein, des fluides de refroidissement et des fluides hydrauliques, ainsi que du carburant.

12. Utilisation du tuyau plastique multicouche selon les revendications 1 à 9 pour fabriquer des corps creux.

13. Utilisation du tuyau plastique multicouche selon les revendications 1 à 9 pour fabriquer des goulottes de remplissage ou des réservoirs dans le secteur des véhicule à moteur.
